(19) Europäisches Patentamt
European Patent Office
Office européen des brevets

(11) **EP 2 130 015 B1**

(12) **FASCICULE DE BREVET EUROPEEN**

(45) Date de publication et mention
de la délivrance du brevet:
**20.11.2013 Bulletin 2013/47**

(21) Numéro de dépôt: **08775623.5**

(22) Date de dépôt: **04.03.2008**

(51) Int Cl.:
**G01J 9/04** [(2006.01)]

(86) Numéro de dépôt international:
**PCT/FR2008/000283**

(87) Numéro de publication internationale:
**WO 2008/132305 (06.11.2008 Gazette 2008/45)**

(54) **DISPOSITIF POUR LA MESURE D'UNE PHASE SPECTRALE D'UN SIGNAL PÉRIODIQUE**

VERFAHREN ZUM MESSEN DER SPEKTRALPHASE EINES PERIODISCHEN SIGNALS

METHOD FOR MEASURING THE SPECTRAL PHASE OF A PERIODIC SIGNAL

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **05.03.2007 FR 0701588**

(43) Date de publication de la demande:
**09.12.2009 Bulletin 2009/50**

(73) Titulaire: **CENTRE NATIONAL DE LA RECHERCHE SCIENTIFIQUE (CNRS)**
**75794 Paris Cedex 16 (FR)**

(72) Inventeurs:
• **GOSSET, Christophe**
**F-22700 Perros Guirec (FR)**
• **RENAUDIER, Jérémie**
**F-91190 Gif-sur-Yvette (FR)**
• **OUDAR, Jean-Louis**
**F-92290 Chateney Malabry (FR)**
• **AUBIN, Guy Georges**
**F-78220 Viroflay (FR)**

(74) Mandataire: **Novagraaf Technologies**
**122, rue Edouard Vaillant**
**92593 Levallois-Perret Cedex (FR)**

(56) Documents cités:
• **GOSSET J RENAUDIER G-H DUAN J-L OUDAR C: "Spectral Phase Characterization of a 40 GHz Self-Pulsating DBR Laser Based on Intensity Autocorrelation Analysis" QUANTUM ELECTRONICS AND LASER SCIENCE, 2005 CONFERENCE BALTIMORE, MD, USA 22-27 MAY 2005, PISCATAWAY, NJ, USA,IEEE, 22 mai 2005 (2005-05-22), pages 1056-1058, XP010887579 ISBN: 1-55752-796-2**
• **KOCKAERT P ET AL: "Simple Amplitude and Phase Measuring Technique for Ultrahigh-Repetition-Rate Lasers" IEEE PHOTONICS TECHNOLOGY LETTERS, IEEE SERVICE CENTER, PISCATAWAY, NJ, US, vol. 12, no. 2, février 2000 (2000-02), XP011046975 ISSN: 1041-1135**
• **KOECHNER, WALTER: "Solid-State Laser Engineering" 1976, SPRINGER-VERLAG , NEW YORK , XP002452283 figure 9.10 page 481, ligne 1-4 pages 482-485**

**Description**

L'invention se rapporte à un dispositif pour mesurer la phase spectrale d'un signal périodique à une fréquence $f_p$, le signal périodique étant porté par un signal optique.

Un signal résultant de la modulation d'un signal optique porteur par une enveloppe dépendant du temps t peut être exprimé sous la forme suivante :

$$E(t)=Re(A(t)\ exp\ (2i\pi f_0 t)),$$

dans lequel A(t) est l'enveloppe complexe du signal optique, $f_0$ est la fréquence optique de référence de la porteuse et le sigle Re() désigne la partie réelle d'une fonction complexe.

L'invention vise à déterminer la phase spectrale de la fonction A(t) lorsque A(t) est périodique.

Lorsque la fonction A(t) est une fonction périodique de fréquence fp, elle peut s'exprimer sous la forme suivante :

$$A(t) = SUM\ (1,\ M,\ P_k^{1/2}exp[i(2(k-1)\pi f_p t + \varphi_k])$$

dans lequel

- SUM (i, j, f(k)) est la somme pour k allant de i à j des f(k) ;
- $P_k$ est la puissance du kième mode optique du signal A(t) ;
- $\varphi_k$ est la phase du kième mode optique du signal A(t) ;

La phase spectrale de A(t) correspond à l'ensemble des phases $\varphi_k$ de ses modes optiques.

Plusieurs dispositifs ont été proposés pour mesurer une telle phase spectrale.

Plusieurs de ces dispositifs utilisent une horloge de référence synchronisée sur le signal périodique pour déterminer une mesure de la phase spectrale.

Toutefois, l'utilisation d'une telle horloge de référence synchronisée n'est pas avantageuse, notamment du fait du coût d'adaptation d'une telle horloge pour différents dispositifs émetteurs. Le désavantage des dispositifs de récupération d'horloge est le coup additionnel qu'ils engendrent.

Contrairement à ces dispositifs nécessitant une horloge de référence, l'invention se rapporte à un dispositif autoréférencé de mesure d'une phase spectrale.

Dans le domaine de ces dispositifs autoréférencés, on connaît notamment, de la publication de Gosset et al. « Phase and amplitude characterization of a 40-Ghz self pulsating DBR laser based on autocorrelation analysis », Journal of Lightwave Technology, Vol 24, n° 2, 2006, un dispositif pour mesurer la phase spectrale d'un signal périodique à une fréquence $f_P$, le signal périodique étant porté par un signal optique, comprenant :

- des moyens de déphasage;
- des moyens de transmission agencés pour transmettre au moins trois modes optiques appartenant audit signal périodique aux moyens de déphasage, lesdits modes optiques définissant des battements à la fréquence $f_p$ ;
- les moyens de déphasage étant agencés pour modifier la différence de phase entre les battements à la fréquence fp;
- des moyens de mesure agencés pour mesurer l'amplitude des battements à la fréquence $f_p$.

Dans la publication susmentionnée, il a été en effet démontré que, pour une sélection de trois et quatre modes optiques, il est possible de déterminer la phase relative de ces modes optiques. La sélection d'au moins trois modes optiques adjacents permet en effet de définir des battements à la fréquence $f_p$. Lorsque l'on introduit un déphasage entre les battements à la fréquence fp, l'amplitude des battements résultant à la fréquence fp varie. Dans le cas d'un signal à trois modes, cette variation est sinusoïdale. Une mesure de l'amplitude des battements permet alors de déterminer la phase spectrale du signal à trois modes.

Dans la publication susmentionnée, les moyens de mesure pour mesurer l'amplitude des battements comprennent un autocorrélateur en intensité basé sur une génération de seconde harmonique optique, suivi d'une analyse en série de Fourier du signal fourni par l'autocorrélateur.

Toutefois, un tel auto-corrélateur a une sensibilité faible, de sorte qu'il est nécessaire d'utiliser un amplificateur optique pour amplifier le signal optique filtré en sortie des moyens de déphasage. En outre, le phénomène de génération de seconde harmonique étant sensible à la polarisation du signal optique, il est nécessaire d'utiliser un contrôleur de polarisation en entrée de l'autocorrélateur.

L'invention vise notamment à pallier ces inconvénients.

Le problème résolu par l'invention est notamment de fournir un dispositif tel que précédemment décrit ayant une meilleure sensibilité.

Ce problème est résolu par un dispositif autoréférencé tel que précédemment décrit dans lequel les moyens de mesure comprennent des moyens de conversion photoélectrique agencés pour détecter le terme variable à la fréquence $f_p$ de la puissance reçue du signal optique, de sorte à générer un signal électrique correspondant à la superposition des battements optiques à la fréquence fp , de sorte à générer un signal électrique correspondant à la superposition des battements optiques à la fréquence $f_p$, et des moyens de mesure électriques agencés pour mesurer l'amplitude du signal électrique, de sorte à déterminer l'amplitude des battements optiques à la fréquence $f_p$.

L'idée à la base de l'invention est donc d'avoir réalisé que la détection du terme variable à la fréquence fp permettait une amélioration de la sensibilité du dispositif.

Grâce à ces moyens de conversion photoélectriques, les battements optiques à la fréquence fp sont convertis en un signal électrique, et c'est ce signal électrique qui est mesuré par des moyens électriques de mesure, ce qui améliore la sensibilité de la mesure de l'amplitude. En effet, dans l'état de l'art antérieur, l'utilisation d'un autocorrélateur ne permet de mesurer que des signaux dont la puissance est supérieure à une valeur typique de l'ordre de 1 mW. Grâce à la conversion directe du signal optique en signal électrique, on peut, dans l'état de l'art actuel de détection des signaux électriques, améliorer la sensibilité d'au moins un facteur 100, et mesurer ainsi des signaux optiques dont la puissance n'excède pas 10 $\mu$W.

Dans la publication susmentionnée, une photodiode est utilisée pour transformer un signal optique en un signal électrique avant le passage par un oscilloscope et une analyse de Fourier. Toutefois, une telle photodiode est une photodiode dite lente, au sens où, pour la détection d'un signal ayant une puissance du type $P(t) = P_0 + P_1 \cos((2\pi fp).t + \varphi)$, la photodiode ne peut détecter que le terme constant $P_0$ et non le terme variable à la fréquence fp, $P_1 \cos((2\pi\ fp).t + \varphi)$. La publication susmentionnée n'enseigne donc pas un dispositif autoréférencé comprenant des moyens de conversion photoélectrique agencés pour détecter le terme variable à la fréquence fp de la puissance reçue du signal optique comme dans l'invention.

Au contraire, selon l'invention, le dispositif autoréférencé comprend les caracteristiques selon la revendication 1.

On connaît des photodiodes rapides utilisées pour détecter un terme variable à la fréquence fp par exemple du document Kockaert et al. « Simple amplitude and phase measuring technique for ultra-high-repetition-rate lasers ». Toutefois, dans ce document, le terme détecté est directement issu de deux modes adjacents, sans introduction d'un déphasage comme dans l'invention. Dès lors, le dispositif décrit dans ce document est un dispositif référencé qui nécessite un signal d'horloge. Par rapport à ce document, l'invention permet de pallier l'inconvénient de l'utilisation d'une horloge de référence. En outre, ce document ne mentionne pas le problème de l'amélioration de la sensibilité par rapport à des systèmes d'auto-corrélation.

Des modes de réalisation avantageux de l'invention sont maintenant décrits.

Selon un premier mode de réalisation, les moyens de conversion comprennent une photodiode ayant une bande passante, la fréquence $f_p$ étant dans la bande passante.

Selon ce mode de réalisation, puisque la fréquence fp est dans la bande passante de la photodiode, la photodiode peut détecter les battements à la fréquence fp.

Ce mode de réalisation a notamment l'avantage qu'il est possible d'utiliser des photodiodes très peu sensibles à la polarisation des signaux détectés.

Selon un autre mode de réalisation de l'invention, les moyens de conversion comprennent :

- des moyens de modification de fréquence agencés pour modifier les battements à la fréquence fp en des battements à une deuxième fréquence $f_p'$ différente de la fréquence fp sans modifier la phase des battements;
- une photodiode ayant une bande passante, la deuxième fréquence $f_p'$ étant dans la bande passante de la photodiode.

Ce mode de réalisation a l'avantage qu'il permet d'utiliser une photodiode ayant une bande passante pouvant être moins élevée que la fréquence fp du signal périodique, tout en permettant de réaliser la mesure d'amplitude, grâce à une conversion adaptée à la bande passante de la photodiode, lorsque la deuxième fréquence $f_p'$ est inférieure à la fréquence fp du signal périodique.

Selon l'invention, les moyens de déphasage comprennent des fibres optiques de longueurs différentes. Ce n'est qu'un exemple de réalisation. D'autres moyens de déphasages sont possibles : réseaux de Bragg à glissement de fréquence, réseaux de diffraction, etc...

La propagation dans des fibres optiques de longueurs différentes permet en effet de modifier la différence de phase entre les battements à la fréquence fp.

Selon l'invention, les moyens de transmission comprennent un filtre de préférence accordable en longueur d'onde. La bande passante du filtre est adaptée pour sélectionner au moins trois modes optiques.

Ceci a l'avantage de permettre une sélection simple des différents groupes d'au moins modes optiques du signal périodique. En effectuant successivement l'analyse pour tous les groupes d'au moins trois modes adjacents, ceci permet donc d'avoir une connaissance complète de la phase spectrale du signal périodique pour tous les modes optiques.

On décrit maintenant un mode de réalisation de l'invention en référence aux figures annexées dans lesquelles :

FIG. 1 est un schéma illustrant un dispositif selon un mode de réalisation de l'invention ;
FIG. 2 illustre un spectre optique du signal périodique dans un graphique d'intensité en fonction de la longueur d'onde ;
FIG. 3 illustre l'évolution de l'amplitude des battements à la fréquence fp pour un groupe de trois modes optiques adjacents obtenue selon l'invention en fonction du déphasage introduit entre les deux battements optiques à la fréquence $f_p$.

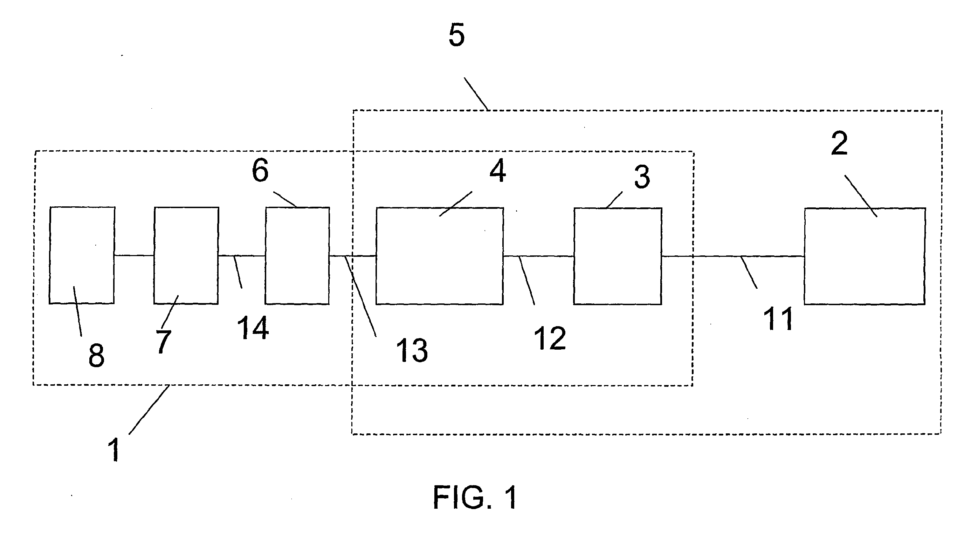

Illustré FIG. 1, un dispositif 1 pour mesurer une phase spectrale d'un signal périodique 11 à une fréquence fp porté par un signal optique. Le signal 11 est généré par un laser 2 du type DBR, acronyme anglais signifiant « Distributed Bragg Reflector », signifiant laser à miroir de bragg distribué. Le laser 2, fonctionnant en régime impulsionnel (blocage de modes), est un laser pulsé émettant un signal périodique radiofréquence porté par un signal optique. Le signal périodique radiofréquence a une fréquence de 40 Ghz. Ce n'est qu'un exemple de réalisation de signal périodique optique.

Un tel signal résultant de la modulation d'une onde optique porteuse par une enveloppe dépendant du temps t peut être exprimé sous la forme suivante :

$$E(t)=Re(A(t) \exp (2i\pi f_0 t)),$$

dans lequel A(t) est l'enveloppe complexe du signal optique, $f_0$ est la fréquence optique de la porteuse et le sigle Re() désigne la partie réelle d'une fonction complexe.

Le dispositif 1 est agencé pour déterminer la phase spectrale de la fonction A(t), lorsque A(t) est une fonction périodique de fréquence fp, c'est-à-dire lorsque A(t) peut s'exprimer sous la forme suivante :

$$A(t) = SUM (1, M, P_k^{1/2} \exp[i(2(k-1)\pi f_p t + \varphi_k])$$

dans lequel

- SUM (i, j, f(k)) est la somme pour k allant de i à j des f(k) ;
- $P_k$ est la puissance du kième mode optique du signal optique E(t) ;
- $\varphi_k$ est la phase du kième mode optique du signal optique E(t) ;

La phase spectrale de A(t) correspond aux phases $\varphi_k$ de ses modes.

Le dispositif 1 comprend un filtre 3 agencé pour recevoir le signal 11. Le filtre 3 est adapté pour sélectionner trois modes optiques adjacents k1, k2 et k3 du signal 11 représenté par E(t). Le filtre 3 a une bande passante de 1 nanomètre de sorte à être adapté à la fréquence $f_p$ de 40 Ghz.

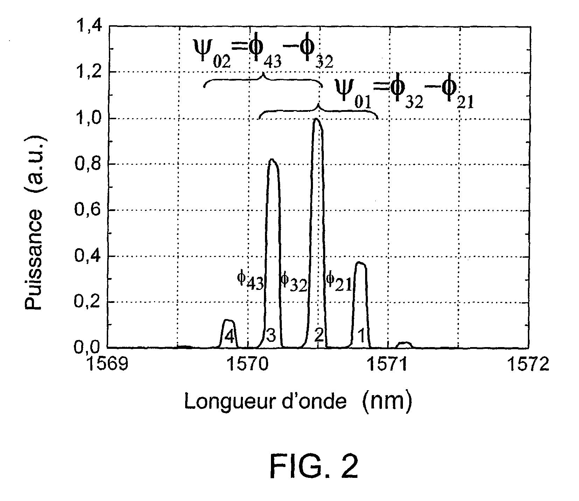

En sortie du filtre, un signal optique 12 comprenant les trois modes optiques k1, k2 et k3 est donc généré. Les modes optiques k1, k2 et k3 sont représentés FIG. 2 dans un graphique de puissance en fonction de la longueur d'onde.

Ce signal 12 est fourni en entrée d'un déphaseur 4. Ce déphaseur 4 est agencé pour introduire un déphasage connu à la phase relative des battements définis par deux modes.

Deux modes optiques adjacents définissent de façon connue en soi un battement à la fréquence $f_p$ ayant une phase ϕ égale à différence des phases des deux modes définissant le battement. Trois modes optiques adjacents définissent deux battements optiques à la fréquence $f_p$ et 1 battement optique à la fréquence $2f_p$. La différence de phase entre les deux battements à la fréquence $f_p$ est notée ψ.

Cette différence de phase est définie de façon connue en soi de la façon suivante :

Soit $\varphi_1$, $\varphi_2$ et $\varphi_3$ les phases respectives des modes optiques k1, k2 et k3 de la FIG. 2, le premier battement à la fréquence fp défini par les modes optiques k1 et k2 a une phase égale à $\phi_{21}= \varphi_2 - \varphi_1$, et le deuxième battement à la fréquence fp défini par les modes optiques k2 et k3 a une phase égale à $\phi_{32}= \varphi_3 - \varphi_2$. La phase relative des battements est donc égale à $\psi=\phi_{32}-\phi_{21}$. On note que cette phase relative des battements est égale à une phase du deuxième ordre en fonction des phases des modes propres $\psi = \varphi_3 - 2\varphi_2 + \varphi_1$.

Le déphaseur 4 est alors agencé pour ajouter une phase connue $\Delta\psi$ à la différence de phase $\psi$ entre les battements à la fréquence fp.

Le déphaseur 4 comprend par exemple des fibres optiques dispersives de longueur différentes de sorte à introduire un déphasage connu proportionnel à la longueur des fibres optiques.

De façon générale, l'ensemble 5 formé du laser 2, du filtre 3 et du déphaseur 4, peut être choisi comme dans la publication susmentionnée « Phase and amplitude characterization of a 40-Ghz self pulsating DBR laser based on autocorrelation analysis ».

En sortie de l'ensemble 5, le signal 13 formé par les trois modes optiques a une amplitude de la forme suivante :

$$P(t) = P_0 + P_{21}\cos\left((2\pi f_p).t + \phi'_{21}\right) + P_{32}\cos\left((2\pi f_p).t + \phi'_{32}\right) + P_{31}\cos\left((4\pi f_p).t + \phi'_{31}\right)$$

dans lequel les termes en cosinus $(2\pi fp).t$ correspondent aux battements à la fréquence fp d'une part entre les modes k1 et k2 et d'autre part entre les modes k2 et k3, et le terme en cosinus $(4\pi f_p).t$ correspond à un battement à la fréquence $2 f_p$ entre les modes k1 et k3. Dans l'expression ci-dessus, les termes $\phi'_{21}$, $\phi'_{32}$ et $\phi'_{31}$ correspondent aux phases des battements déphasés par le déphaseur 4, de telle sorte que $(\phi'_{32}-\phi'_{21})-(\phi_{32}-\phi_{21})=\Delta\psi$

Le dispositif 1 comprend en outre une photodiode 6 ayant une bande passante au moins égale à la fréquence $f_p$ de sorte à pouvoir détecter les battements à la fréquence $f_p$ définis par au moins deux modes optiques adjacents.

La photodiode 6 est donc apte à détecter le terme $P_{21}\cos\left((2\pi f_p).t + \varphi'_{21}\right) + P_{32}\cos\left((2\pi f_p).t + \varphi'_{32}\right)$ dans l'expression de la puissance ci-dessus. Une telle photodiode est connue en soi sous le nom de « photodiode rapide », par opposition à une « photodiode lente » qui ne pourrait détecter que le terme constant $P_0$. Les photodiodes rapides de bande passante B sont des composants permettant de détecter des signaux optiques radiofréquences dont la fréquence radiofréquence est inférieure à B. Par contre, des détecteurs lents ne sont sensibles qu'à la puissance moyenne.

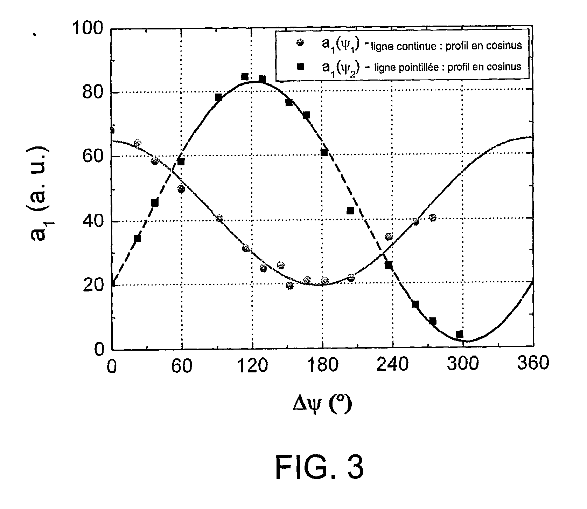

En sortie de la photodiode 6, on obtient donc un signal 14 ayant un profil d'amplitude sous la forme d'une sinusoïde avec le temps, et dont l'amplitude est fonction de $\Delta\psi$, comme illustré FIG. 3.

L'évolution de l'amplitude de ce signal avec le déphasage $\Delta\psi$ étant du type A + Bcos $(\phi + \Delta\psi)$, il est possible, en mesurant l'amplitude du battement pour au moins un déphasage $\Delta\psi$, de déterminer par ajustement la valeur du déphasage $\psi$ entre les deux battements à la fréquence fp.

Afin de mesurer l'amplitude du signal électrique résultant du battement à la fréquence $f_p$, le dispositif 1 comprend notamment un redresseur 7 destiné à fournir un signal continu dont la valeur est fonction de l'amplitude à la fréquence $f_p$ du signal 14, et relié à un puissant mètre ou voltmètre 8, ou un autre moyen.

Une fois la valeur du déphasage $\psi$ entre les deux battements à la fréquence $f_p$ obtenu, on obtient les phases $\varphi_k$ de chacun des modes optiques par la formule suivante :

$$\varphi_m = \mathrm{SUM}(j=1,\ j=m-1,\ \mathrm{SUM}(k=1,\ k=j-1,\ \phi_k)),$$

dans lequel $\phi_k$ est la différence de phase entre deux battements correspondant à des modes optiques adjacent, avec $\phi_k = \phi_{k+1} - 2\phi_k + \phi_{k-1}$.

Dans une mesure auto-référencée, les phases des deux premiers modes optiques correspondant à m=0 et m=1 sont arbitraires. On peut en choisir d'autres, mais toujours deux. Une variation de la phase $\varphi_0$ est en effet équivalente à une variation de la phase de la porteuse optique, et une variation de la différence $\varphi_1-\varphi_0$ est équivalente à une variation de phase du signal périodique, ce qui revient à changer le moment d'apparition du signal périodique, ce qui ne change pas le profil temporel de la puissance instantanée du signal optique périodique.

Afin d'obtenir les valeurs $\psi_k$ de déphasage entre deux battements adjacents à la fréquence $f_p$, correspondant à trois modes optiques adjacents, pour l'ensemble des groupes de trois modes optiques contenus dans le signal périodique, on fait varier la zone de filtrage du filtre 3. Ce filtre 3 est donc de préférence un filtre accordable en longueur d'onde de sorte à ne pas devoir changer de filtre à chaque sélection d'un groupe de trois modes optiques.

La connaissance de l'ensemble des différences de phase entre les battements correspondant à des modes optiques adjacents, permet d'obtenir une connaissance complète du profil d'amplitude et de phase du signal émis par le laser 2, puisque ce profil peut-être calculé à partir de la connaissance du spectre optique et des différences de phase entre battements adjacents $\psi_k$. Ceci est démontré en détail dans la publication susmentionnée « Phase and amplitude characterization of a 40-Ghz self pulsating DBR laser based on autocorrelation analysis ».

On décrit maintenant des variantes de l'invention.

On a décrit un mode de réalisation dans lequel le filtre 3 est agencé pour sélectionner exactement trois modes optiques du signal périodique généré par le laser 2. La sélection de trois modes optiques fournit une précision satisfaisante sur la mesure de la phase spectrale. Toutefois, en diminuant cette précision, il est possible d'utiliser des filtres sélectionnant plus de trois modes optiques du signal périodique. La précision de la mesure diminue alors lorsque le nombre de modes optiques sélectionnés augmente.

En outre, si la phase spectrale de trois modes optiques particuliers est la seule phase d'intérêt, il n'est pas nécessaire de sélectionner plusieurs groupes de trois modes optiques, de sorte que le filtre 3 n'est pas nécessairement accordable en longueur d'onde. De même, si le laser 2 génère directement uniquement trois modes optiques, le filtre 3 n'est pas nécessaire, et l'introduction du déphasage peut être réalisé directement en sortie du laser 2.

Par ailleurs, on a décrit un mode de réalisation dans lequel la photodiode 6 est une photodiode rapide ayant une bande passante plus grande que la fréquence fp du signal périodique.

Toutefois, il est également possible de remplacer une telle photodiode rapide 6 par une autre photodiode apte à détecter les battements à une fréquence $f_p'$ inférieure à $f_p$. Dans ce cas, on positionne, avant une telle photodiode, des moyens de modification de la fréquence des battements de sorte à ramener ces battements à la fréquence $f_p'$ pour qu'ils puissent être détectés par la photodiode.

Ces moyens de modification de la fréquence comprennent par exemple un modulateur, modulant sinusoïdalement le signal dont la fréquence est à translater. Ce résultat est une propriété de la transformée de Fourier et est connu dans le domaine du traitement du signal.

## Revendications

**1.** Dispositif autoréférencé (1) pour mesurer la phase spectrale d'un signal périodique à une fréquence fp, le signal périodique étant porté par un signal optique comprenant :

- des moyens de déphasage (4) ;
- un filtre (3) agencé pour transmettre au moins trois modes optiques appartenant audit signal périodique aux moyens de déphasage, lesdits modes optiques définissant des battements à la fréquence fp ;
- les moyens de déphasage (4) étant agencés pour modifier la différence de phase entre les battements à la fréquence fp;
- des moyens de mesure électriques (6, 7, 8) agencés pour mesurer l'amplitude des battements à la fréquence fp ;

**caractérisé en ce que** les moyens de mesure (6, 7, 8) comprennent :

- une photodiode (6) agencée pour détecter le terme variable à la fréquence fp de la puissance reçue du signal optique, de sorte à générer un signal électrique (14) correspondant à la superposition des battements optiques à la fréquence fp ; et **en ce que**
- les moyens de mesure électriques (7, 8) sont agencés pour mesurer l'amplitude dudit signal électrique (14), de sorte à déterminer l'amplitude des battements à la fréquence fp, et comprennent un redresseur (7) destiné à fournir un signal continu dont la valeur est fonction de l'amplitude à la fréquence fp du signal.

**2.** Dispositif selon la revendication 1 dans lequel les moyens de conversion photoélectrique comprennent une photodiode ayant une bande passante, la fréquence fp étant dans la bande passante de la photodiode.

**3.** Dispositif selon la revendication 1 dans lequel les moyens de conversion photoélectriques comprennent :

- des moyens de modification de fréquence agencés pour transposer la fréquence des battements à la fréquence fp en des battements à une deuxième fréquence fp' différente de la fréquence fp, sans modifier la phase des battements ;
- une photodiode ayant une bande passante, la deuxième fréquence fp' étant dans la bande passante de la photodiode.

**4.** Dispositif selon la revendication 3 dans lequel la deuxième fréquence fp' est inférieure à la fréquence fp.

**5.** Dispositif selon l'une des revendications précédentes dans lequel les moyens de déphasage comprennent des fibres optiques de longueurs différentes.

**6.** Dispositif selon l'une des revendications précédentes dans lequel les moyens de transmission comprennent un filtre ayant une bande passante agencée pour isoler lesdits au moins trois modes optiques dans le signal périodique.

**7.** Dispositif selon la revendication 6 dans lequel ledit filtre est accordable en longueur d'onde.

**8.** Dispositif selon l'une des revendications 6 ou 7 dans lequel le filtre est agencé pour isoler trois modes optiques dans le signal périodique.

**Patentansprüche**

**1.** Selbstreferenzierte Vorrichtung (1), um die spektrale Phase eines periodischen Signals mit einer Frequenz fp zu messen, wobei das periodische Signal von einem optischen Signal getragen wird, das Folgendes umfasst:

- Phasendifferenzmittel (4);
- einen Filter (3), der angeordnet ist, um mindestens drei optische Modi, die zu dem periodischen Signal gehören, an die Phasendifferenzmittel zu übertragen, wobei die optischen Modi Schwingungen mit der Frequenz fp definieren,
- wobei die Phasendifferenzmittel (4) angeordnet sind, um den Phasenunterschied zwischen den Schwingungen mit der Frequenz fp zu modifizieren;
- elektrische Messmittel (6, 7, 8), die angeordnet sind, um die Amplitude der Schwingungen mit der Frequenz fp zu messen;

**dadurch gekennzeichnet, dass** die Messmittel (6, 7, 8) Folgendes umfassen:

- eine Photodiode (6), die angeordnet ist, um das variable Energieniveau mit der Frequenz fp der erhaltenen Leistung des optischen Signals nachzuweisen, um ein elektrisches Signal (14) zu erzeugen, das der Überlagerung der optischen Schwingungen mit der Frequenz fp entspricht; und dadurch, dass
- die elektrischen Messmittel (7, 8), angeordnet sind, um die Amplitude des elektrischen Signals (14) zu messen, um die Amplitude der Schwingungen mit der Frequenz fp zu bestimmen, und einen Gleichrichter (7) umfassen, der dazu ausgelegt ist, ein ununterbrochenes Signal zu liefern, dessen Wert eine Funktion der Amplitude mit der Frequenz fp des Signals ist.

**2.** Vorrichtung nach Anspruch 1, wobei die Mittel zur photoelektrischen Umwandlung eine Photodiode umfassen, die eine Übertragungsbandbreite aufweist, wobei die Frequenz fp in der Übertragungsbandbreite der Photodiode liegt.

**3.** Vorrichtung nach Anspruch 1, wobei die Mittel zur photoelektrischen Umwandlung Folgendes umfassen:

- Mittel zur Modifizierung der Frequenz, die angeordnet sind, um die Frequenz der Schwingungen mit der Frequenz fp in Schwingungen mit einer zweiten Frequenz fp' zu transponieren, die verschieden von der Frequenz fp ist, ohne die Phase der Schwingungen zu modifizieren;
- eine Photodiode mit einer Übertragungsbandbreite, wobei die zweite Frequenz fp' in der Übertragungsbandbreite der Photodiode liegt.

**4.** Vorrichtung nach Anspruch 3, wobei die zweite Frequenz fp' niedriger als die Frequenz fp ist.

**5.** Vorrichtung nach einem der vorhergehenden Ansprüche, wobei die Phasendifferenzmittel optische Fasern mit verschiedenen Längen umfassen.

**6.** Vorrichtung nach einem der vorhergehenden Ansprüche, wobei dies Übertragungsmittel einen Filter mit einer Übertragungsbandbreite aufweisen, der angeordnet ist, um die mindestens drei optischen Modi im periodischen Signal zu isolieren.

**7.** Vorrichtung nach Anspruch 6, wobei der Filter in der Wellenlänge eingestellt werden kann.

**8.** Vorrichtung nach einem der Ansprüche 6 oder 7, wobei der Filter angeordnet ist, um die mindestens drei optischen Modi im periodischen Signal zu isolieren.

**Claims**

1. Self-referenced device (1) for measuring the spectral phase of a periodic signal at a frequency fp, the periodic signal being carried by an optical signal comprising:

   - phase-shifting means (4);
   - a filter (3) arranged for transmitting at least three optical modes of said periodic signal to said phase-shifting means, said optical modes defining beats at the frequency fp;
   - the phase-shifting means (4) being arranged for modifying the phase difference between the beats at the frequency fp;
   - electrical measuring means (6, 7, 8) arranged for measuring the amplitude of the beats at the frequency fp;

   **characterised in that** the measuring means (6, 7, 8) comprise:

   - a photodiode (6)arranged for detecting the variable term at the frequency fp of the received power of the optical signal, so as to generate an electric signal (14) corresponding to the overlay of the optical beats at the frequency fp; and **in that**
   - the electrical measuring means (7, 8) are arranged for measuring the amplitude of said electric signal (14), so as to determine the amplitude of the beats at the frequency fp, and comprise a rectifier (7) for supplying a continuous signal, the value whereof is dependent on the amplitude at the frequency fp of the signal.

2. Device according to claim 1 wherein the photoelectric conversion means comprise a photodiode having a pass-band, with the frequency fp being within the pass-band of the photodiode.

3. Device according to claim 1 wherein the photoelectric conversion means comprise:

   - frequency modification means arranged for transposing the frequency of the beats at the frequency fp into beats at a second frequency fp' different to the frequency fp, without modifying the phase of the beats;
   - a photodiode having a pass-band, with the second frequency fp' being within the pass-band of the photodiode.

4. Device according to claim 3 wherein the second frequency fp' is less than the frequency fp.

5. Device according to any of the above claims wherein the phase-shifting means comprise optical fibres having different lengths.

6. Device according to any of the above claims wherein the transmission means comprise a filter having a pass-band arranged for isolating said at least three optical modes in the periodic signal.

7. Device according to claim 6 wherein said filter is suitable for being tuned in respect of wavelength.

8. Device according to any of claims 6 or 7 wherein the filter is arranged for isolating three optical modes in the periodic signal.

FIG. 1

EP 2 130 015 B1

FIG. 2

FIG. 3

EP 2 130 015 B1

**EP 2 130 015 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **GOSSET et al.** Phase and amplitude characterization of a 40-Ghz self pulsating DBR laser based on autocorrelation analysis. *Journal of Lightwave Technology,* 2006, vol. 24 (2